# EUROPÄISCHE PATENTSCHRIFT

(11) **EP 2 846 655 B1**
(45) Veröffentlichungstag und Bekanntmachung des Hinweises auf die Patenterteilung: **06.07.2016**
(21) Anmeldenummer: 12722292.5
(22) Anmeldetag: 09.05.2012
(51) Int. Cl.: A43B 13/10, B29D 35/12, A43B 13/14, A43B 17/14, A43B 17/04, A43B 17/06, A43B 13/41, A43B 13/18, A43B 13/16

(54) **EINLEGESOHLE FÜR SCHUHE**
INSOLE FOR SHOES
SEMELLE INTÉRIEURE POUR CHAUSSURES

(43) Veröffentlichungstag der Anmeldung: 18.03.2015
(73) Patentinhaber: Norbert Schmid GmbH & Co. KG, 70736 Fellbach (DE)
(72) Erfinder: DAUBENBERGER, Markus, 70734 Fellbach (DE); SCHMID, Dietmar, 70734 Fellbach (DE)
(74) Vertreter: Wasmuth, Rolf
(86) Internationale Anmeldenummer: PCT/EP2012/002000
(87) Internationale Veröffentlichungsnummer: WO 2013/167155

(56) Entgegenhaltungen:
- EP-A1- 0 373 330
- EP-A1- 0 373 336
- EP-A1- 2 446 765
- EP-A2- 0 434 076

## Beschreibung

Die Erfindung betrifft eine Einlegesohle für Schuhe der im Oberbegriff des Anspruchs 1 genannten Gattung.

Aus der DE 10 2008 059 030 Al ist eine Einlegesohle für einen Schuh bekannt. Diese Einlegesohle ist eine separat in den Schuh einlegbare Stützsohle, die aus Federstahl gefertigt ist. Damit der Fuß nicht direkt mit dieser Einlegesohle in Kontakt kommt, kann auf die Einlegesohle ein konventionelles Einlegepolster gelegt werden. Eine solche Einlegesohle bietet zwar eine zuverlässige Stütze des Fußes, damit allein kann jedoch dem erforderlichen Tragekomfort nicht entsprochen werden.

EP2446765A1 offenbart eine Einlegesohle mit den Merkmalen des Oberbegriffs des Anspruchs 1.

Der vorliegenden Erfindung liegt daher die Aufgabe zugrunde, eine Einlegesohle der gattungsgemäßen Art zu schaffen, durch die die biomechanischen Eigenschaften der Einlegesohle im vorderen Bereich dauerhaft aufrechterhalten bleiben und der hintere Teil des Stützelements auf die Anatomie des Fußes angepasst ist.

Diese Aufgabe wird durch eine Einlegesohle mit den Merkmalen des Anspruchs 1 gelöst.

Dadurch, dass das Stützelement aus einem Vorderteil und einem mit diesem fest verbundenen Korpus, der den hinteren Teil des Stützelements bildet, besteht, können für den Vorderteil und den Korpus unterschiedliche Materialien verwendet werden, so dass den jeweiligen Anforderungen im vorderen Fußbereich und im hinteren Fußbereich entsprechend Rechnung getragen werden kann. Um die biomechanischen Eigenschaften im Vorderteil aufrecht zu erhalten, besteht dieses aus einem harten Plattenmaterial mit einer Querprofilierung. Der Korpus dagegen ist ein Spritzgussteil aus Kunststoff, das an einem Verbindungsbereich des Vorderteils angespritzt ist, derart, dass der Kunststoff zumindest einen Teil des Verbindungsbereichs umschließt.

Gemäß einer zweckmäßigen Ausgestaltung weist das Vorderteil an dem Verbindungsbereich eine Endkontur auf, die in den Kunststoff des Korpus eingebettet ist. Dabei ist es vorteilhaft, dass im Bereich des Vorderteils benachbart zu der Endkontur mindestens eine Öffnung vorgesehen ist und der Kunststoff diese Öffnung durchdringt, so dass das Vorderteil mit dem Korpus zusätzlich formschlüssig verbunden ist. Damit ist eine äußerst haltbare Verbindung geschaffen. Darüber hinaus ist es von Vorteil, dass die Endkontur einen ersten geraden Abschnitt, einen zumindest in einer annähernd parallelen Ebene verlaufenden zweiten geraden Abschnitt und einen zwischen diesen befindlichen Übergangsabschnitt umfasst. Dadurch ist es möglich, den Korpus an seinen beiden Längskanten unterschiedlich lang zu gestalten, was die Gestaltungsfreiheit des Korpus erweitert. Auf diese Weise können entlang von Längsseiten am Korpus ein inneres Längsgewölbe und ein äußeres Längsgewölbe in der jeweils günstigsten Form ausgebildet werden.

Gemäß einer weiteren Ausgestaltung der Erfindung sind entlang der Endkontur in geringem Abstand zu dieser mehrere Öffnungen im Kunststoff vorhanden, die bis zu dem Plattenmaterial des Verbindungsbereichs reichen. Diese Öffnungen im Material des Korpus zu beiden Seiten des Verbindungsbereichs sind dadurch bedingt, dass in der Spritzform zur Herstellung des Korpus Distanzstifte abgeordnet sind, die das Vorderteil in einer definierten Position halten, damit es bei der Herstellung von Kunststoff ordnungsgemäß umspritzt werden kann. In weiterer Ausgestaltung ist vorgesehen, dass im Korpus in einem hinteren Abschnitt eine Öffnung vorgesehen ist, die zur Aufnahme eines Fersenkissens dient. Dadurch wird der Komfort für den Fuß weiter erhöht. Zur guten Führung der Ferse ist vorgesehen, dass die Öffnung von einem nach oben gewölbten Rand umgeben ist, der sich an einem hinteren Ende des Korpus um die Öffnung herum erstreckt. Damit ist ein sicherer Halt der Ferse gegeben.

In weiterer Ausgestaltung der Erfindung ist vorgesehen, dass auf dem Stützelement eine Deckschicht befestigt ist. Dadurch ist die Einlegesohle mit einer für den Fuß angenehmen Deckschicht komplett, so dass keine zusätzlichen Einlegeteile für den Schuh benötigt werden. Zwischen dem Stützelement und der Deckschicht können weitere Lagen oder Zwischenschichten vorgesehen sein, beispielsweise kann diese weitere Lage oder Zwischenschicht eine zwischen dem Vorderteil und der Deckschicht angeordnete Pelotte sein. Als Material für die Deckschicht und/oder weiteren Lagen kommen Leder, Latexschaum oder EVA in Betracht. Das Plattenmaterial des Vorderteils ist vorzugsweise ein Federstahl. Die Querprofilierung weist vorzugsweise eine Wellenform auf.

Die Erfindung ist nachstehend anhand von in der Zeichnung dargestellten Ausführungsbeispielen näher erläutert. In der Zeichnung zeigt:
- Fig. 1: eine Draufsicht auf ein Stützelement,
- Fig. 2: einen Schnitt entlang der Linie II-II in Fig. 1,
- Fig. 3: eine vergrößerte Darstellung der Einzelheit III in Fig. 2,
- Fig. 4: eine Darstellung gemäß Fig. 2 mit einer auf dem Stützelement aufgebrachten Deckschicht als alternative Ausführung einer Einlegesohle,
- Fig. 5: eine vergrößerte Darstellung der Einzelheit V in Fig. 4.

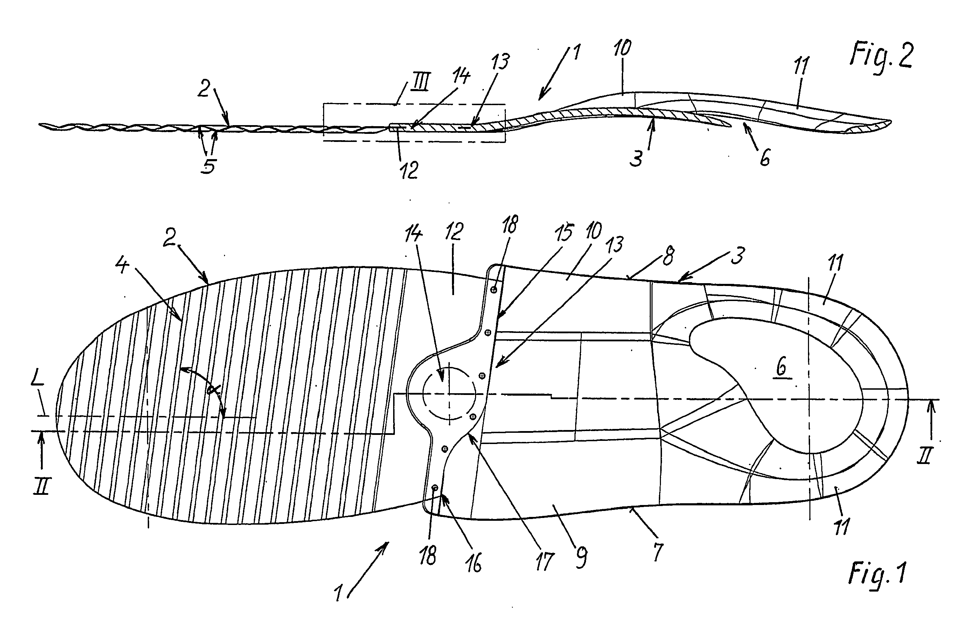

In Fig. 1 ist eine Draufsicht auf ein Stützelement 1 als eine Einlegesohle gezeigt, das aus einem Vorderteil 2 und einem mit diesem fest verbundenen Korpus 3 besteht, wobei der Korpus 3 den hinteren Teil des Stützelements 1 bildet. Das Vorderteil 2 besteht aus einem harten Plattenmaterial mit einer Querprofilierung 4 mit einer gleichmäßigen Wellenform 5, wie dies aus Fig. 2 ersichtlich ist. Als Plattenmaterial ist insbesondere ein Federstahl mit einer Plattendicke von ca. 0,2 mm geeignet; es kommt jedoch auch ein Kunststoffmaterial mit einer entsprechenden Federeigenschaft in Betracht. Die Querprofilierung verläuft in einem Winkel α zu einer Längsachse L des Stützelements 1 von ca. 70° bis 90°, vorzugsweise 77°.

Der Korpus 3 ist ein Spritzgussteil aus Kunststoff, wobei dieser Korpus 3 in seinem hinteren Abschnitt eine Öffnung 6 aufweist. Entlang von Längsseiten 7, 8 des Korpus 3 sind ein inneres Längsgewölbe 9 und ein äußeres Längsgewölbe 10 zur Abstützung des Fußes im Gelenkbereich ausgebildet, wobei aus Fig. 2 das äußere Längsgewölbe 10 ersichtlich ist. Die Öffnung 6 ist gemäß Fig. 2 von einem nach oben gewölbten Rand 11 umgeben, der sich am hinteren Ende des Korpus 3 um die Öffnung 6 herum erstreckt, wie aus Fig. 1 ersichtlich ist.

Gemäß Fig. 1 ist ein Verbindungsbereich 12 des Vorderteils 2 glatt ausgeführt, d. h. ohne Querprofilierung. Dieser Verbindungsbereich 12 ist dem Korpus 3 zugewandt und zum Teil von dem Kunststoffmaterial des Korpus 3 umschlossen. Benachbart zu einer Endkontur 13 des Plattenmaterials ist eine Öffnung 14 im Verbindungsbereich 12 vorgesehen, die im Ausführungsbeispiel kreisförmig ist. Wie Fig. 2 zeigt, ist ein Teil des Verbindungsbereichs 12 vom Kunststoffmaterial eingeschlossen, und dieses durchdringt das Plattenmaterial des Vorderteils 2, so dass Letzteres fest im Material des Korpus 3 verankert ist. Die Endkontur 13 umfasst einen ersten geraden Abschnitt 15, einen zumindest in einer annähernd parallelen Ebene verlaufenden zweiten geraden Abschnitt 16 sowie einen als Doppelbogen ausgeführten Übergangsabschnitt 17. Entlang der Endkontur 13 sind in geringem Abstand zu dieser im Verbindungsbereich 12 mehrere Öffnungen 18 im Material des Korpus 3 zu beiden Seiten des Verbindungsbereichs 12 vorhanden, die bis zu dem Plattenmaterial des Verbindungsbereichs 12 reichen und dadurch bedingt sind, dass in der Spritzform zur Herstellung des Korpus 3 Distanzstifte angeordnet sind, die das Vorderteil 2 in einer definierten Position halten, damit es bei der Herstellung ordnungsgemäß mit Kunststoff umspritzt werden kann. Anstelle der einen Öffnung 14 können auch zwei oder mehr kleinere Öffnungen im Verbindungsbereich 12 vorgesehen sein, die von dem Kunststoffmaterial des Korpus 3 durchdrungen sind.

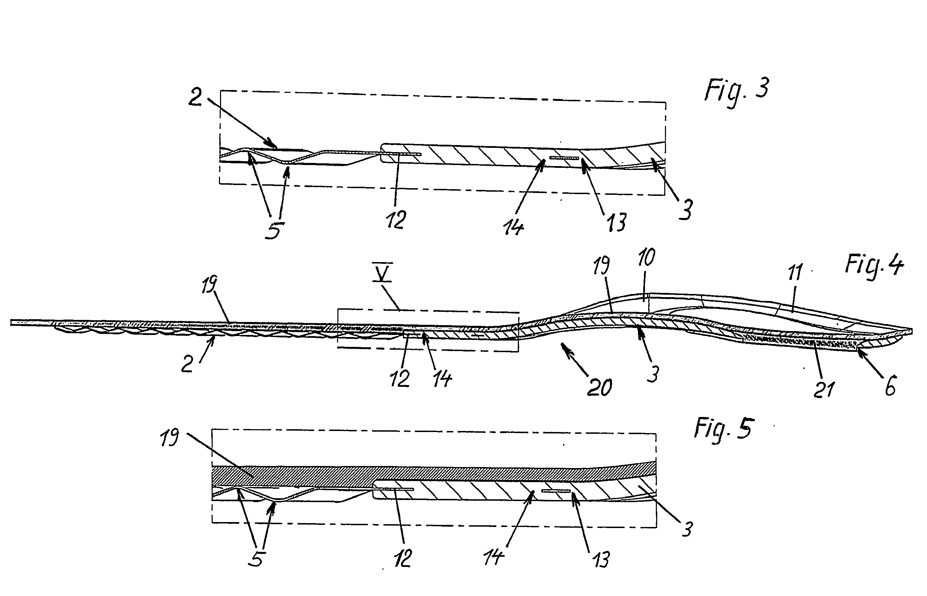

Die Fig. 3 zeigt die Einzelheit III in Fig. 2 in vergrößerter Darstellung. Daraus ist das Vorderteil 2 mit der Wellenform 5 ersichtlich sowie der Verbindungsbereich 12, in dem die Öffnung 14 angeordnet ist. Dem Korpus 3 zugewandt ist die Endkontur 13 des Verbindungsbereichs 12, der auf der Oberseite und der Unterseite vom Kunststoffmaterial des Korpus 3 eingeschlossen ist, wobei das Kunststoffmaterial auch die Öffnung 14 durchdringt, so dass eine formschlüssige Verbindung des Vorderteils 2 mit dem Korpus 3 erzeugt ist.

In Fig. 4 ist ein Längsschnitt durch eine Einlegesohle 20 gezeigt, wobei auf dem Stützelement 1 eine Deckschicht 19 aufgebracht ist. Diese Deckschicht 19 kann beispielsweise aus Leder, Latexschaum oder EVA bestehen. Es ist auch möglich, zwischen der Deckschicht 19 und dem Stützelement 1 weitere Lagen oder Zwischenschichten vorzusehen. Gemäß Fig. 4 umfasst die Einlegesohle 20 auch ein Fersenkissen 21, das in die Öffnung 6 des Korpus 3 eingesetzt und ebenfalls von der Deckschicht 19 überzogen ist. Die äußere Kontur der Deckschicht 19 ist etwas größer als die in Fig. 1 dargestellte Form des Vorderteils 2, so dass die Deckschicht 19 das Vorderteil 2 allseitig überragt, was durch die Schnittdarstellung in Fig. 4 am vorderen Ende des Vorderteils 2 ersichtlich ist. Im Übrigen stimmen die Bezugszeichen für gleiche Teile mit denjenigen der Fig. 1 und 2 überein.

Die Fig. 5 zeigt in vergrößerter Darstellung die Einzelheit V in Fig. 4. Der Verbindungsbereich 12 des Vorderteils 2 weist die Öffnung 14 im Plattenmaterial auf, die vom Kunststoffmaterial, das den Verbindungsbereich 12 umschließt, durchdrungen ist und auf diese Weise die feste Verbindung zwischen Vorderteil 2 und Korpus 3 ergibt. Auf der Oberseite des Vorderteils 2 und Korpus 3 ist die Deckschicht 19 aufgebracht. Zusätzlich zu der Darstellung in Fig. 4 kann zwischen dem Plattenmaterial des Vorderteils 2 und der Deckschicht 19 eine Pelotte vorgesehen sein. Diese Option ist jedoch in der Zeichnung nicht dargestellt.

## Patentansprüche

1. Einlegesohle für Schuhe, wobei die Einlegesohle zumindest ein Stützelement (1) umfasst, wobei das Stützelement (1) aus einem Vorderteil (2) und einem mit diesem fest verbundenen Korpus (3), der einen hinteren Teil des Stützelements (1) bildet, besteht, wobei das Vorderteil (2) aus einem harten Plattenmaterial mit einer Querprofilierung gebildet ist, und der Korpus (3) ein Spritzgussteil aus Kunststoff ist, **dadurch gekennzeichnet, dass** die feste Verbindung dadurch erzeugt ist, dass der Korpus (3) an einem Verbindungsbereich (12) des Vorderteils (2) angespritzt ist, so dass der Kunststoff zumindest einen Teil des Verbindungsbereichs (12) umschließt.

2. Einlegesohle nach Anspruch 1,
**dadurch gekennzeichnet, dass** das Vorderteil (2) an dem Verbindungsbereich (12) eine Endkontur (13) aufweist, die in den Kunststoff des Korpus (3) eingebettet ist.

3. Einlegesohle nach Anspruch 2,
**dadurch gekennzeichnet, dass** im Verbindungsbereich (12) des Vorderteils (2) benachbart zu der Endkontur (13) mindestens eine Öffnung (14) vorgesehen ist, und der Kunststoff diese Öffnung (14) durchdringt, so dass das Vorderteil (2) mit dem Korpus (3) zusätzlich formschlüssig verbunden ist.

4. Einlegesohle nach Anspruch 2 oder 3,
**dadurch gekennzeichnet, dass** die Endkontur (13) einen ersten geraden Abschnitt (15), einen zumindest in einer annähernd parallelen Ebene verlaufenden zweiten geraden Abschnitt (16) und einen zwischen diesen befindlichen Übergangsabschnitt (17) umfasst.

5. Einlegesohle nach einem der Ansprüche 2 bis 4,
**dadurch gekennzeichnet, dass** entlang der Endkontur (13) in geringem Abstand zu dieser mehrere Öffnungen (18) im Kunststoff vorhanden sind, die bis zu dem Plattenmaterial des Verbindungsbereichs (12) reichen.

6. Einlegesohle nach einem der Ansprüche 1 bis 5,
**dadurch gekennzeichnet, dass** im Korpus (3) in einem hinteren Abschnitt eine Öffnung (6) vorgesehen ist, die zur Aufnahme eines Fersenkissens (21) dient.

7. Einlegesohle nach einem der Ansprüche 1 bis 6,
**dadurch gekennzeichnet, dass** am Korpus (3) entlang von Längsseiten (7, 8) ein inneres Längsgewölbe (9) und ein äußeres Längsgewölbe (10) ausgebildet sind.

8. Einlegesohle nach Anspruch 6,
**dadurch gekennzeichnet, dass** die Öffnung (6) von einem nach oben gewölbten Rand (11) umgeben ist, der sich an einem hinteren Ende des Korpus (3) um die Öffnung (6) herum erstreckt.

9. Einlegesohle nach einem der Ansprüche 1 bis 8,
**dadurch gekennzeichnet, dass** auf dem Stützelement (1) eine Deckschicht (19) befestigt ist.

10. Einlegesohle nach Anspruch 9,
**dadurch gekennzeichnet, dass** zwischen dem Stützelement (1) und der Deckschicht (19) weitere Lagen oder Zwischenschichten vorgesehen sind.

11. Einlegesohle nach Anspruch 10,
**dadurch gekennzeichnet, dass** die weitere Lage oder Zwischenschicht eine zwischen dem Vorderteil (2) und der Deckschicht (19) angeordnete Pelotte ist.

12. Einlegesohle nach Anspruch 10,
**dadurch gekennzeichnet, dass** als Material für die Deckschicht (19) und/oder weiteren Lagen Leder, Latexschaum oder EVA vorgesehen sind.

13. Einlegesohle nach Anspruch 3,
**dadurch gekennzeichnet, dass** das Plattenmaterial des Vorderteiles (2) ein Federstahl ist.

14. Einlegesohle nach Anspruch 12,
**dadurch gekennzeichnet, dass** die Querprofilierung (4) eine Wellenform (5) aufweist.

## Claims

1. Insole for shoes, the insole comprising at least one support element (1), wherein the support element (1) consists of a front part (2) and a body (3) permanently joined thereto and forming a rear part of the support element (1), wherein the front part (2) is made of a hard plate material with transverse profiling and the body (3) is a plastic injection-moulded part, **characterised in that** the permanent joint is produced by injection-moulding the body (3) to a joint region (12) of the front part (2), so that the plastic material encloses at least a part of the joint region (12).

2. Insole according to claim 1,
**characterised in that** the front part (2) has an end contour (13) embedded into the plastic material of the body (3) in the joint region (12).

3. Insole according to claim 2,
**characterised in that** at least one opening (14) is provided in the joint region (12) of the front part (2) adjacent to the end contour (13), and **in that** the plastic material penetrates this opening (14), so that the front part (3) is additionally joined positively to the body (3).

4. Insole according to claim 2 or 3,
**characterised in that** the end contour (13) comprises a first straight section (15), a second straight section (16) extending in at least approximately parallel plane and a transitional section (17) placed between these.

5. Insole according to any of claims 2 to 4,
**characterised in that** a plurality of openings (18) in the plastic material, which extend to the plate material of the joint region (12), is provided along the end contour (13) at a small distance therefrom.

6. Insole according to any of claims 1 to 5,
**characterised in that** an opening (6) for the accommodation of a heel cushion (21) is provided in a rear section of the body (3).

7. Insole according to any of claims 1 to 6,
**characterised in that** an inner longitudinal arch (9) and an outer longitudinal arch (10) are formed on the body (3) along long sides (7, 8).

8. Insole according to claim 6,
**characterised in that** the opening (6) is surrounded by an upward-curved edge (11), which extends around the opening (6) at a rear end of the body (3).

9. Insole according to any of claims 1 to 8,
**characterised in that** a cover layer (19) is secured to the support element (1).

10. Insole according to claim 9,
**characterised in that** further layers or intermediate layers are provided between the support element (1) and the cover layer (19).

11. Insole according to claim 10,
**characterised in that** the further layer or intermediate layer is a pad placed between the front part (2) and the cover layer (19).

12. Insole according to claim 10,
**characterised in that** leather, latex foam or EVA is provided as a material for the cover layer (19) and/or the further layers.

13. Insole according to claim 3,
**characterised in that** the plate material of the front part (2) is a spring steel.

14. Insole according to claim 12,
**characterised in that** the transverse profiling (4) has a wave shape (5).

## Revendications

1. Semelle intérieure pour chaussures, étant précisé que ladite semelle intérieure comprend au moins un élément de soutien (1), étant précisé que l'élément de soutien (1) se compose d'un élément avant (2) et d'un corps (3), relié solidement à celui-ci, qui forme une partie arrière de l'élément de soutien (1), étant précisé que l'élément avant (2) est formé à partir d'un matériau en plaque dur avec un profilage transversal, et que le corps (3) est une pièce moulée par injection en matière plastique,
**caractérisée en ce que** la liaison solide est réalisée grâce au fait que le corps (3) est rapporté par moulage par injection sur une zone de liaison (12) de l'élément avant (2), de sorte que la matière plastique entoure au moins une partie de la zone de liaison (12).

2. Semelle intérieure selon la revendication 1,
**caractérisée en ce que** l'élément avant (2) présente sur la zone de liaison (12) un contour d'extrémité (13) qui est enrobé dans la matière plastique du corps (3).

3. Semelle intérieure selon la revendication 2,
**caractérisée en ce qu'**il est prévu dans la zone de liaison (12) de l'élément avant (2), près du contour d'extrémité (13), une ouverture (14) et que la matière plastique traverse cette ouverture (14), de sorte que l'élément avant (2) est relié en supplément par complémentarité de forme au corps (3).

4. Semelle intérieure selon la revendication 2 ou 3,
**caractérisée en ce que** le contour d'extrémité (13) comprend une première section droite (15), une seconde section droite qui s'étend au moins dans un plan approximativement parallèle, et une section de transition (17) qui se trouve entre les deux.

5. Semelle intérieure selon l'une des revendications 2 à 4,
**caractérisée en ce qu'**il y a dans la matière plastique, le long du contour d'extrémité (13), à une faible distance de celui-ci, plusieurs ouvertures (18) qui vont jusqu'au matériau en plaque de la zone de liaison (12).

6. Semelle intérieure selon l'une des revendications 1 à 5,
**caractérisée en ce qu'**il est prévu dans le corps (3), dans une section arrière, une ouverture (6) qui sert à recevoir une talonnette (21).

7. Semelle intérieure selon l'une des revendications 1 à 6,
**caractérisée en ce qu'**il est prévu, formées sur le corps (3), le long de côtés longitudinaux (7, 8), une voûte longitudinale intérieure (9) et une voûte longitudinale extérieure (10).

8. Semelle intérieure selon la revendication 6,
**caractérisée en ce que** l'ouverture (6) est entourée par un bord (11), bombé vers le haut, qui s'étend tout autour de l'ouverture (6), à une extrémité arrière du corps (3).

9. Semelle intérieure selon l'une des revendications 1 à 8,
**caractérisée en ce qu'**une couche de recouvrement (19) est fixée sur l'élément de soutien (1).

10. Semelle intérieure selon la revendication 9,
**caractérisée en ce qu'**il est prévu, entre l'élément de soutien (1) et la couche de recouvrement (19), d'autres couches ou couches intermédiaires.

11. Semelle intérieure selon la revendication 10,
**caractérisée en ce que** l'autre couche ou couche intermédiaire est une pelote disposée entre l'élément avant (2) et la couche de recouvrement (19).

12. Semelle intérieure selon la revendication 10,
**caractérisée en ce qu'**il est prévu comme matériau pour la couche de recouvrement (19) et les autres couches du cuir, de la mousse latex ou de l'EVA.

13. Semelle intérieure selon la revendication 3,
**caractérisée en ce que** le matériau en plaque de l'élément avant (2) est un acier à ressort.

14. Semelle intérieure selon la revendication 12,
**caractérisée en ce que** le profilage transversal (4) présente une forme ondulée (5).
